(19) Europäisches Patentamt

European Patent Office

Office européen des brevets

(11) **EP 1 347 620 B1**

(12) **EUROPÄISCHE PATENTSCHRIFT**

(45) Veröffentlichungstag und Bekanntmachung des Hinweises auf die Patenterteilung:
**26.10.2005 Patentblatt 2005/43**

(51) Int Cl.⁷: **H04L 29/08**, H04L 29/06

(21) Anmeldenummer: 03090018.7

(22) Anmeldetag: **22.01.2003**

(54) **Abrechnung einer kostenpflichtigen Nutzung von im Internet bereitgestellten Daten durch ein Mobilfunkendgerät**

Billing the use of content data requiring fee provided in the Internet by using a mobile radio terminal

Facturation de l'utilisation des données de contenu mis à la disposition dans l'internet par un terminal mobile

(84) Benannte Vertragsstaaten:
**DE FI FR GB**

(30) Priorität: **18.03.2002 DE 10213072**

(43) Veröffentlichungstag der Anmeldung:
**24.09.2003 Patentblatt 2003/39**

(73) Patentinhaber: **SIEMENS AKTIENGESELLSCHAFT**
**80333 München (DE)**

(72) Erfinder: **Herzog, Christian**
**13187 Berlin (DE)**

(56) Entgegenhaltungen:
**WO-A-01/69903**          **WO-A-02/21788**
**WO-A-02/21865**          **WO-A-02/102016**
**DE-A- 19 946 537**

## Beschreibung

Die Erfindung betrifft ein Verfahren zum Betrieb eines einem Mobilfunknetz zugeordneten Abrechnungssystems zur Abrechnung einer kostenpflichtigen Nutzung von Daten, welche seitens eines netzexternen Datenspeichers bereitgestellt werden, wobei zur Nutzung die Daten mittels eines mobilen Endgeräts eines Nutzers des Mobilfunknetzes abgerufen werden. Die Erfindung betrifft ebenso ein Datenübertragungsnetz zur Durchführung dieses Verfahrens.

In modernen Mobilkommunikationsnetzen, wie z. B. Mobilfunknetzen der zweiten oder dritten Generation, sollen den Nutzern in Zukunft neben dem Aufbau und der Unterhaltung von einfachen Sprach- oder Datenverbindungen verstärkt zusätzliche Dienste, sog. Mehrwertdienste, angeboten werden. Eine bedeutende Art dieser Mehrwertdienste besteht darin, einem Nutzer des Mobilfunknetzes die Möglichkeit zu geben, ihn interessierende Daten aus Datenspeichern abzurufen und beispielsweise auf sein Mobiltelefon herunterzuladen. Bei diesen Daten kann es sich beispielsweise um Textinformationen, Bildinformationen, Ton- oder Filmdaten handeln. Derartige Daten können auch von Institutionen bereitgestellt werden, welche unabhängig sind von den Betreibern der Mobilfunknetze. Die Benutzung dieser Mehrwertdienste wird oftmals für den Mobilfunkteilnehmer kostenpflichtig sein.

Aus der Offenlegungsschrift DE 199 46 537 A1 ist ein Verfahren zur Abrechnung von Internet-Dienstleistungen über Mobilfunk bekannt, bei dem ein Mobilfunkendgerät in einem Mobilfunknetz mittels seiner Mobilfunkrufnummer MSISDN identifiziert wird. Im Internet wird dieses Mobilfunkendgerät über eine zu der Mobilfunkrufnummer MSISDN zugeordnete temporäre IP-Adresse identifiziert. Ein zur Abrechnung genutztes Payment-Gateway liest aus einer MSISDN-IP-Datenbank die zu der temporären IP-Adresse gehörende Mobilfunkrufnummer MSISDN aus und ermittelt mit dieser Mobilfunkrufnummer in einer Payment-Datenbank abgelegte Kundendaten. Daraufhin wird die Abrechnung vorgenommen.

Es ist Aufgabe der vorliegenden Erfindung, ein Verfahren und ein Datenübertragungsnetz anzugeben, mit denen in einer einfachen und zuverlässigen Art und Weise die kostenpflichtige Nutzung von Daten, welche seitens eines netzexternen Datenspeichers bereitgestellt werden, abgerechnet werden kann.

Diese Aufgabe wird erfindungsgemäß bei einem Verfahren der eingangs angegebenen Art dadurch gelöst, dass von dem mobilen Endgerät aus eine den Nutzer kennzeichnende Nutzeradresse und ein die abzurufenden Daten kennzeichnendes Datenkennzeichen über das Mobilfunknetz zu einem mit dem Mobilfunknetz verbundenen Zwischenknoten übertragen wird, von dem Zwischenknoten aus der Nutzeradresse mittels eines Verschlüsselungsverfahrens und eines zugehörigen Schlüssels eine anonyme Nutzerkennung erzeugt wird, von dem Zwischenknoten die anonyme Nutzerkennung und das Datenkennzeichen zu dem Datenspeicher übertragen wird, wodurch der Datenspeicher veranlasst wird, eine den abgerufenen Daten zugeordnete Kostengröße und die anonyme Nutzerkennung zu dem Abrechnungssystem zu übertragen, von dem Abrechnungssystem mittels eines dem Verschlüsselungsverfahren zugehörigen Schlüssels aus der anonymen Nutzerkennung die Nutzeradresse zurückgewonnen wird, und von dem Abrechnungssystem unter Nutzung der Nutzeradresse und der Kostengröße ein Kostenkonto, welches dem Nutzer zugeordnet ist, belastet wird. Dabei ist insbesondere vorteilhaft, dass auf Seiten des Datenspeichers nur die anonyme Nutzerkennung bekannt ist, nicht aber die Nutzeradresse des Mobilfunknutzers. Dadurch kann einerseits die Identität des Nutzers geschützt werden, und andererseits ist dennoch von Seiten des Datenspeichers eine Abrechnung über das Abrechnungssystem möglich.

Das erfindungsgemäße Verfahren kann derart ausgestaltet sein, dass der Zwischenknoten über das Internet mit dem Datenspeicher verbindbar ist. Damit können bei dem erfindungsgemäßen Verfahren vorteilhafterweise Daten über das Internet einfach und komfortabel übertragen werden.

Das erfindungsgemäße Verfahren kann auch so ablaufen, dass von dem Abrechnungssystem das Kostenkonto des Nutzers belastet wird, indem auf dem Kostenkonto entsprechend der Kostengröße ein Kostenbetrag reserviert wird, bei erfolgreicher Reservierung eine Reservierungserfolgsnachricht von dem Abrechnungssystem an den Datenspeicher übertragen wird, wodurch der Datenspeicher veranlasst wird, die abgerufenen Daten über den Zwischenknoten zu dem Endgerät des Nutzers zu übertragen und bei erfolgreicher Übertragung eine die anonyme Nutzerkennung und die Kostengröße enthaltende Belastungsnachricht an das Abrechnungssystem zu senden, und daraufhin von dem Abrechnungssystem das Kostenkonto entsprechend der Kostengröße belastet wird. Bei einem derartigen Ablauf ist vorteilhafterweise durch die der Belastung vorangehende Reservierung sichergestellt, dass die auftretenden Kosten über das Kostenkonto abgerechnet werden können. Dadurch wird das finanzielle Risiko auf Seiten des Datenspeichers bzw. auf Seiten des Datenanbieters erheblich reduziert.

Das erfindungsgemäße Verfahren kann so ablaufen, dass nach Belastung des Kostenkontos von dem Abrechnungssystem eine Belastungs-Erfolgsnachricht an den Datenspeicher übertragen wird, wodurch dieser veranlasst wird, die Belastung des Kontos betreffende Daten für eine spätere Belastungsüberprüfung zu speichern. Dadurch werden die die Abrechnung betreffenden Daten vorteilhafterweise beim Datenspeicher abgespeichert, so dass eine spätere Überprüfung der Abrechnungsvorgänge möglich wird.

Das erfindungsgemäße Verfahren kann auch so ausgestaltet sein, dass die Belastungs-Erfolgsnachricht von dem Abrechnungssystem mit einer Signatur des Abrechnungssystems versehen wird, wodurch die Herkunft der Belastungs-Erfolgsnachricht belegbar ist. Dadurch kann vorteilhafterweise bei einer späteren Überprüfung der Abrechnungsvorgänge nachgewiesen werden, dass die Belastungs-Erfolgsnachricht tatsächlich von dem Abrechnungssystem erzeugt wurde.

Bei dem erfindungsgemäßen Verfahren kann als Kostenkonto ein vorausbezahltes Kostenkonto des Nutzers belastet werden. Dadurch kann das erfindungsgemäße Verfahren vorteilhafterweise in Verbindung mit den in Kommunikationsnetzen bekannten Guthabenkonten (Prepaid-Konten) durchgeführt werden.

Bei dem erfindungsgemäßen Verfahren kann auch als Kostenkonto ein Registrierungs-Kostenkonto des Nutzers belastet werden, wobei die Einträge des Registrierungs-Kostenkontos nach Nutzung der abgerufenen Daten zu einer Rechnungserstellung für den Nutzer verwendet werden. Dadurch ist es vorteilhafterweise möglich, die bei Mobilfunknetzen vorhandenen Rechnungserstellungssysteme (Postpaid Billing Systems) auch in Verbindung mit dem erfindungsgemäßen Verfahren zu nutzen.

Das erfindungsgemäße Verfahren kann so ausgestaltet sein, dass auf dem Kostenkonto nur dann der Kostenbetrag reserviert wird, wenn eine zuvor vom Abrechnungssystem bei dem Zwischenknoten durchgeführte Kontrollabfrage ergeben hat, dass von dem mobilen Endgerät die Daten abgerufen wurden. Das Verfahren kann auch so ausgestaltet sein, dass von dem Abrechnungssystem das Kostenkonto nur dann belastet wird, wenn eine zuvor vom Abrechnungssystem bei dem Zwischenknoten durchgeführte Kontrollabfrage ergeben hat, dass von dem mobilen Endgerät die Daten abgerufen wurden. Bei den beiden letztgenannten Ausführungsformen wird sichergestellt, dass das Kostenkonto vorteilhafterweise nur dann mit einem Kostenbetrag belastet wird oder dass ein Geldbetrag auf einem derartigen Buchungs-Konto nur dann reserviert wird, wenn tatsächlich ein Datenabruf von kostenpflichtigen Daten durch das Endgerät stattgefunden hat. Dadurch kann die Sicherheit des Systems bei Auftreten von Übertragungsfehlern oder bei Auftreten von betrügerischen Belastungsversuchen wesentlich erhöht werden.

Die obengenannte Aufgabe wird ebenfalls erfindungsgemäß gelöst durch ein Datenübertragungsnetz mit einem zur Datenübertragung dienenden Zwischenknoten und einem Abrechnungssystem, wobei der Zwischenknoten eine Verschlüsselungseinrichtung zur Erzeugung einer anonymen Nutzerkennung aus einer den Nutzer eines mobilen Endgerätes kennzeichnenden Nutzeradresse aufweist, das Abrechnungssystem eine Empfangseinrichtung zum Empfang von anonymen Nutzerkennungen enthaltenden Nachrichten aufweist, das Abrechnungssystem eine Entschlüsselungseinrichtung zur Zurückgewinnung der Nutzeradresse aus der anonymen Nutzerkennung mittels eines dem Verschlüsselungsverfahren zugehörigen Schlüssels aufweist, und das Abrechnungssystem Belastungseinrichtungen zur Belastung von Kostenkonten, welche Nutzern des Mobilfunknetzes zugeordnet sind, aufweist.

Dieses Datenübertragungsnetz kann so ausgestaltet sein, dass das Abrechnungssystem über eine Kontrollschnittstelle mit dem Zwischenknoten verbunden ist, welche einen Austausch von Kontrollabfragen und Abfrageantworten zwischen dem Abrechnungssystem und dem Zwischenknoten ermöglicht, wobei die Kontrollabfragen und die Abfrageantworten einen erfolgten Abruf von Daten durch das mobile Endgerät betreffen.

Zur weiteren Erläuterung der Erfindung ist in der Figur ein Ausführungsbeispiel eines Datenübertragungsnetzes mit schematisch dargestellten beispielhaften Verfahrensschritten des erfindungsgemäßen Abrechnungsverfahrens dargestellt.

In der Figur ist ein Endgerät KEG (KEG = Kommunikationsendgerät) dargestellt, welches über eine den Endgerätenutzer kennzeichnende Nutzeradresse MSISDN (MSISDN = Mobile Station ISDN-Number) adressiert werden kann. Dieses Endgerät KEG ist über eine Luftschnittstelle mit dem Mobilfunknetz MFN verbunden. Das Mobilfunknetz MFN wiederum ist über einen Zwischenknoten ZK mit dem Internet I-NET verbunden. An das Internet I-NET ist ein Datenspeicher DS angeschlossen, auf dem eine Vielzahl von Daten abgelegt sind. Ein Nutzer des Endgerätes KEG kann nun mit diesem durch das Internet I-NET manövrieren (browsen) und dabei Informationen und Daten finden, deren Nutzung kostenpflichtig ist.

Bei dem Endgerät KEG kann es sich beispielsweise um ein Mobiltelefon, einen Laptop, einen Palmtop oder ein PDA (PDA = Personal Digital Assistant) mit einem Mobilfunkmodul handeln. Der Zwischenknoten ZK kann beispielsweise von einem Rechner dargestellt werden, welcher das Mobilfunknetz MFN mit dem Internet I-NET verbindet; ein solcher Rechner kann auch als ein "Mobile Smart Proxy"-Rechner bezeichnet werden. Der Zwischenknoten ZK kann - wie in der Figur dargestellt - außerhalb des Mobilfunknetzes MFN angeordnet und mit dem Mobilfunknetz MFN verbunden sein. Der Zwischenknoten ZK kann aber auch von einem Knoten (z. B. Rechner) des Mobilfunknetzes gebildet werden. Der Datenspeicher DS kann realisiert sein in Verbindung mit einem Server-Rechner, welcher von einem sog. Inhalteanbieter (Content Provider) betrieben wird und welcher an das Internet angeschlossen ist.

Auf seiner Suche findet der Nutzer des Endgerätes KEG ihn interessierende Daten beispielsweise in Form einer Internet-seite, deren Ansicht kostenpflichtig ist oder in Form einer Datei, auf die der Zugriff (Download) kostenpflichtig ist. Dabei handelt es sich also um maschinenlesbare Daten, die dazu vorgesehen sind, auf einer Anzeigeeinheit des Endgerätes angezeigt zu werden (Internetseite) oder mittels eines Rechners (PC, Laptop, Handy) weiterverarbeitet zu werden (Datei). Zur Ansicht der Internetseite, d. h. zur Nutzung der kostenpflichtigen Daten, sendet das Endgerät KEG eine Abforderungsnachricht http1, welche die den Nutzer des Endgerätes KEG kennzeichnende Nutzeradresse MSISDN und ein die abzurufenden Daten (d. h. in diesem Fall die abzurufende Internet-Seite) kennzeichnendes Datenkennzeichen (z. B. www.info1.de) enthält, über das Mobilfunknetz MFN zu dem Zwischenknoten ZK. Der Zwischenknoten ZK enthält eine Liste WLIST welche eine Auflistung von Datenkennzeichen (URL's = Uniform Resource Locators) von Internet-Seiten von Datenanbietern (Content Providern) enthält, mit denen der Operator des Zwischenknotens eine vertragliche Beziehung eingegangen ist, auf deren Grundlage er für diesen Inhalteanbieter ein Inkasso betreibt.

Ist das mit der Abforderungsnachricht übertragene Datenkennzeichen nicht in der Liste WLIST enthalten, so wird keine Abrechnung des Datenzugriffs durchgeführt und die Abforderungsnachricht wird unverändert in das Internet weitergeleitet (in der Figur nicht dargestellt). In diesem Falle kann mit dem Endgeräte KEG in bekannter Art und Weise im Internet "gesurft" werden. Ist jedoch das Datenkennzeichen in der Liste WLIST enthalten, so nimmt der Zwischenknoten eine Verschlüsselung der in der Abforderungsnachricht enthaltene Nutzeradresse MSISDN vor.

Unter Benutzung eines in dem Zwischenknoten ZK vorrätig gehaltenen Schlüssels KEY wird die Nutzeradresse MSISDN verschlüsselt; es entsteht eine anonyme Nutzerkennung AUID. Bei dem Schlüssel KEY handelt es sich um eine alphanumerische Zeichenfolge, die nur dem Operator des Zwischenknotens ZK bekannt ist. Derartige Verschlüsselungen als solche sind bekannt, es können dafür sowohl symmetrische Verschlüsselungsverfahren wie beispielsweise das DES-Verfahren, das TRIPLE-DES-Verfahren oder das IDEA-Verfahren eingesetzt werden. Es können aber auch unsymmetrische Verschlüsselungsverfahren wie beispielsweise das bekannte RSA-Verfahren verwendet werden. Mathematisch dargestellt errechnet sich die anonyme Nutzerkennung aus der Nutzeradresse MSISDN und dem Schlüssel KEY des Verschlüsselungsverfahrens:

$$AUID = f(MSISDN, KEY)$$

$$z.\ B.\ MSISDN = 0049\ 0170\ 124568$$

$$\rightarrow AUID = A3K4XX5$$

Der Zwischenknoten ZK speichert die Abforderungsnachricht http1 betreffende Abforderungsdaten in einem Kontrollspeicher Mem ab; diese Abforderungsdaten werden später in einem Kontrollschritt zur Überprüfung der Korrektheit von Abrechnungsvorgängen verwendet. Als solche Abforderungsdaten können z.B. die Nutzeradresse MSISDN, die Nutzerkennung AUID, das Datenkennzeichen www.info1.de und die Abforderungszeit (Zeitpunkt des Empfangs der Abforderungsnachricht seitens des Zwischenknotens) abgespeichert werden.

Im Anschluss an die Verschlüsselung sendet der Zwischenknoten ZK eine anonymisierte Abforderungsnachricht http2, welche neben dem Datenkennzeichen die anonyme Nutzerkennung AUID enthält, über das Internet I-NET an den Datenspeicher DS, welcher die abgerufene Internet-Seite enthält. Dabei kann die anonyme Nutzerkennung AUID und das Datenkennzeichen beispielsweise in einem sog. "http-header" der anonymisierten Abforderungsnachricht http2 übertragen werden. Die Verbindung zwischen dem Zwischenknoten ZK und dem Datenspeicher DS kann kryptographisch gesichert sein (beispielsweise unter Nutzung des Kryptographie-Verfahrens SSL). Damit kann sichergestellt werden, dass die anonyme Nutzerkennung AUID beim Transport zu dem Datenspeicher DS nicht verfälscht wird. Der Datenspeicher DS empfängt die anonymisierte Abforderungsnachricht http2. Anhand dieser anonymisierten Abforderungsnachricht http2 erkennt der Datenspeicher den Absender dieser Nachricht (in diesem Fall den Zwischenknoten ZK). Diese Erkennung kann beispielsweise unter Benutzung der bekannten "SSL Client Authorisation" und/oder unter Benutzung der mit der anonymisierten Abforderungsnachricht http2 mit übertragenen IP-Adresse des Zwischenknotens ZK erfolgen.

Der Betreiber des Datenspeichers (der Content Provider) ist eine Vertragsbindung eingegangen mit dem Betreiber des Zwischenknotens ZK (dies wurde bereits oben erwähnt in Verbindung mit der Liste WLIST). Aufgrund dieses Vertrages ist dem Betreiber des Datenspeichers DS bekannt, dass der Betreiber des Zwischenknotens ZK ein Abrechnungssystem AS (Payment System) betreibt. Das Abrechnungssystem AS kann - wie in der Figur dargestellt - außerhalb des Mobilfunknetzes MFN angeordnet sein und über den Zwischenknoten mit dem Mobilfunknetz MFN verbunden sein. Das Abrechnungssystem AS kann aber auch einen Teil des Mobilfunknetzes MFN darstellen, also zu dem Mobilfunknetz MFN gehören.

Dieses Abrechnungssystem AS wird zur Abrechnung der kostenpflichtigen Benutzung von Daten auch von dem Datenspeicher DS verwendet. Der Datenspeicher DS ermittelt nun die abgerufenen Daten (stellt also in diesem Fall die abgerufene Internet-Seite www.info1.de bereit) und ermittelt anhand einer dieser Seite zugeordneten Kostengröße die Kosten, die pro Abruf der Seite zu berechnen sind. Daraufhin sendet der Datenspeicher DS eine Reservierungsnachricht Res (welche die Kostengröße und die anonyme Nutzerkennung AUID enthält) an das Abrechnungssystem AS. Die Verbindung zwischen dem Datenspeicher DS und dem Abrechnungssystem AS kann beispielsweise mittels des bekannten SSL-Verfahrens gesichert werden. Das Abrechnungssystem AS empfängt die Reservierungsnachricht Res mit Hilfe einer Empfangseinrichtung E, wobei die Empfangseinrichtung E zum Empfang von anonyme Nutzerkennungen AUID enthaltenden Nachrichten eingerichtet ist. Das Abrechnungssystem AS verfügt über den Schlüssel KEY, welcher beim Verschlüsseln der Nutzeradresse MSISDN von dem Zwischenknoten ZK verwendet wurde. Mit Hilfe dieses Schlüssels KEY kann das Abrechnungssystem AS die anonyme Nutzerkennung AUID entschlüsseln und damit die Nutzeradresse MSISDN im Klartext zurückgewinnen. Mit Hilfe der Nutzeradresse MSISDN ist ein Zugriff auf ein Kostenkonto des Nutzers des Kommunikationsendgerätes KEG möglich. In diesem Fall verfügt der Nutzer des Endgerätes KEG über ein voraus bezahltes Kostenkonto V-KK (ein sog. Prepaid-Konto), über das er die auftretenden Kosten gewöhnlich abrechnet. Das Abrechnungssystem AS sendet eine veränderte Reservierungsnachricht Res2 (welche die Nutzeradresse MSISDN enthält) an das voraus bezahlte Kostenkonto V-KK und reserviert damit auf diesem voraus bezahlten Kostenkonto V-KK einen Kostenbetrag entsprechend der Kostengröße. Wenn diese Reservierung erfolgreich verläuft (weil z. B. auf dem voraus bezahlten Kostenkonto ein entsprechend hohes Guthaben vorhanden ist), so sendet das Abrechnungssystem AS eine Reservierungserfolgsnachricht Res_OK an den Datenspeicher. Daraufhin überträgt der Datenspeicher DS die bereitgestellten kostenpflichtigen Daten in Form der Internet-Seite mittels einer Datenübertragungsnachricht dat über das Internet und den Zwischenknoten ZK an das Endgerät KEG. Für diese Übertragung kann z.B. eine bereits bei der Übertragung der Abforderungsnachricht http1 aufgebaute Datenverbindung ("socket") zwischen dem Datenspeicher DS und dem Endgerät KEG genutzt werden. Beim Endgerät liegt nun die abgerufene kostenpflichtige Internet-Seite vor. Der Datenspeicher DS erfährt beispielsweise über das im Internet zur Datenübertragung verwendete Protokoll TCP (TCP = Transmission Control Protocol) von der erfolgreichen Übertragung der Internetseite zu dem Kommunikationsendgerät KEG. Daraufhin sendet der Datenspeicher DS eine Belastungsnachricht Char, welche die anonyme Nutzerkennung AUID und die Kostengröße enthält, an das Abrechnungssystem AS. Das Abrechnungssystem AS belastet nun mittels einer Belastungseinrichtung B das Kostenkonto mit dem entsprechenden Betrag, wobei es den zuvor reservierten Kostenbetrag ganz oder teilweise abbucht (Nachricht Char(MSISDN). Nach einer erfolgreichen Abbuchung sendet das Abrechnungssystem AS eine Belastungs-Erfolgsnachricht Char_OK an den Datenspeicher DS und der Datenspeicher DS speichert diese Belastungs-Erfolgsnachricht in einer Archiv-Datei LOG. Die Belastungserfolgsnachricht kann von dem Abrechnungssystem AS mit einer Signatur des Abrechnungssystems versehen (signiert) werden, dadurch ist auch später die Herkunft der Belastungserfolgsnachricht (also der Absender, in diesem Fall das Abrechnungssystem AS) belegbar. Damit ist der Abrechnungsvorgang beendet.

Wenn ein Nutzer des Endgerätes KEG kein voraus bezahltes Konto V-KK besitzt, sondern die von ihm verursachten Kosten nach Empfang einer Rechnung bezahlt, dann kann bei dem bisher beschriebenen Ausführungsbeispiel anstelle der veränderten Belastungsnachricht Char(MSISDN) eine Ticket-Nachricht TICK erzeugt und an ein Registrierungs-Kostenkonto R-KK gesendet werden. Unter Nutzung der in diesem Registrierungskostenkonto abgespeicherten Daten wird dann am Ende des jeweiligen Abrechnungszeitraums eine Rechnung R (z. B. eine monatliche Telefonrechnung) erstellt und dem Nutzer des Endgerätes KEG zugesandt. Bei Verwendung eines Registrierungs-Kostenkontos ist eine vorherige Reservierung des Kostenbetrages im allgemeinen nicht notwendig, da seitens des Endgerätenutzers im allgemeinen sämtliche auf einer Rechnung R gebuchten Kosten beglichen werden.

Das voraus bezahlte Kostenkonto V-KK und das Registrierungs-Kostenkonto R-KK kann - wie in der Figur dargestellt - außerhalb des Abrechnungssystems AS angeordnet und mit diesem verbunden sein. Die beiden Kostenkonten V-KK und R-KK können aber auch als Teil des Abrechnungssystems AS ausgebildet sein.

Das Abrechnungssystem AS ist über eine interne, nicht öffentlich zugängliche Kontrollschnittstelle KS mit dem Zwischenknoten ZK verbindbar. Mit Hilfe dieser Kontrollschnittstelle KS kann eine zusätzliche Sicherungsmaßnahme realisiert werden. Um zu verhindern, dass von Seiten des Datenspeichers DS nicht gerechtfertigte Reservierungsanforderungen oder Belastungsanforderungen unter Benutzung einer (evtl. aus früheren Geschäftsvorfällen bekannten) anonymen Nutzerkennung AUID durchgeführt werden, wird von dem Abrechnungssystem AS nur dann der Kostenbetrag auf dem Kostenkonto reserviert, wenn eine zuvor von dem Abrechnungssystem AS bei dem Zwischenknoten ZK durchgeführte Kontrollabfrage ergeben hat, dass von dem mobilen Endgerät KEG tatsächlich die Daten, die der Reservierungsanforderung zugrunde liegen, abgerufen wurden. Nur wenn der Zwischenknoten ZK eine entsprechende Kontrollabfrageantwort KAA an das Abrechnungssystem AS zurücksendet, findet die Reservierung statt. Analoge Verfahrensschritte können vor der Belastung des Kostenkontos angewendet werden.

Nach Empfang einer Kontrollabfrage KA überprüft der Zwischenknoten ZK, ob über ihn tatsächlich die entsprechenden kostenpflichtigen Daten abgerufen wurden, für die nun eine Reservierungsanforderung oder eine Kostenkontobelastungsanforderung vorliegt. Dies kann beispielsweise so realisiert werden, dass zusammen mit der Kontrollabfrage KA das Datenkennzeichen und die anonyme Nutzerkennung mitgesendet wird (welche das Abrechnungssystem AS mit der entsprechenden Reservierungsanforderung oder Belastungsanforderung von dem Datenspeicher DS erhalten hat). Anhand des Datenkennzeichens und der anonymen Nutzerkennung AUID kann nun der Zwischenknoten ZK anhand der in dem Kontrollspeicher Mem abgespeicherten Abforderungsdaten feststellen, ob bei ihm (z. B. unmittelbar zuvor - die an dem Verfahren beteiligten Komponenten arbeiten z. B. nahezu in Echtzeit) eine Abforderungsnachricht von dem Endgerät KEG eingetroffen ist, welche das entsprechende Datenkennzeichen enthielt und welche die Nutzeradresse MSISDN enthielt, die zu der anonymen Nutzerkennung AUID verschlüsselt wurde. Für diese Überprüfung kann auch anstelle der Nutzerkennung AUID die Nutzeradresse MSISDN genutzt werden, die zuvor vom Abrechnungssystem AS aus der Nutzerkennung AUID berechnet wurde.

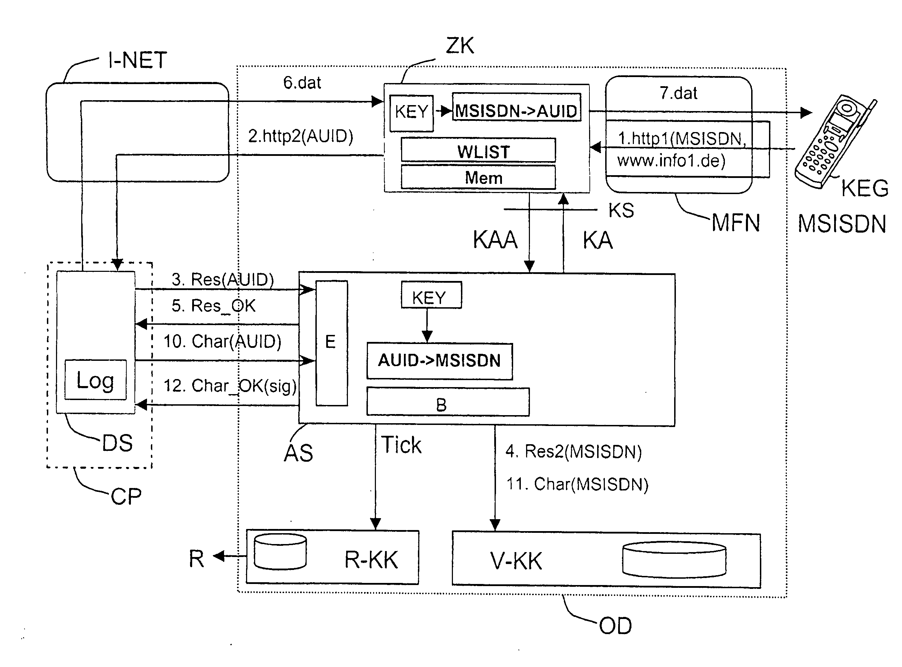

Das Mobilfunknetz MFN, der Zwischenknoten ZK, das Abrechnungssystem AS, das voraus bezahlte Kostenkonto V-KK sowie das Registrierungs-Kostenkonto R-KK unterliegen dem Einfluss ein und desselben Betreibers (Operators); diese Netzelemente befinden sich in der sog. "Operator Domain" OD. Dies ist in der Figur 1 durch eine gepunktete Linie symbolisiert. Der Datenspeicher DS hingegen befindet sich unter dem Einfluss eines Datenanbieters; der Datenspeicher ist in einer sog. "Content Provider Domain" CP angeordnet. Dieser Einflussbereich CP ist in der Figur durch eine Strichpunktlinie symbolisiert.

Bei dem beschriebenen Verfahren ist besonders vorteilhaft, dass ein Betreiber des Datenspeichers DS (der auch als Content Provider eines Content Servers bezeichnet wird) nicht die Nutzeradresse MSISDN des Endgerätes KEG erfährt und daher keine Rückschlüsse auf die Person des Nutzers ziehen kann oder diese Nutzeradresse z. B. für die Zusendung unerwünschter Werbung verwenden kann. Durch die Verschlüsselung mit dem gleichen Schlüssel unter Nutzung der in der Regel gleichen Nutzeradresse eines Mobilfunknutzers kann auf Seiten des Datenspeichers aber bei wiederholten Verfahrensabläufen erkannt werden, daß es sich um den gleichen Nutzer handelt.

Auf Seiten des Datenspeichers können also Nutzerprofile erstellt und gepflegt werden ("Was hat dieser Nutzer schon hier gekauft?", Erstellung und Speicherung von persönlichen Einstellungen), es können auch z. B. Mengenrabatte oder andere Rabatte für diesen Nutzer eingeräumt werden. Dies ist möglich, da die anonyme Nutzerkennung AUID für den Nutzer immer dieselbe ist. (Die Nutzerkennung AUID ist für den Nutzer beispielsweise dann dieselbe, wenn der Nutzer dasselbe Endgerät KEG verwendet, in welches er dieselbe SIM-Karte einsetzt, so dass er dieselbe Mobilfunkrufnummer MSISDN verwendet.) Von besonderem Vorteil ist weiterhin, dass der Nutzer des Endgerätes KEG über seine Nutzeradresse (z.B. seine Mobilfunkrufnummer MSISDN) sicher identifiziert werden kann, so dass die Eingabe eines zusätzlichen Nutzernamens oder eines zugehörigen Passwortes unnötig ist. Dadurch ist eine sehr bequeme und nutzerfreundliche Verfahrensgestaltung möglich.

**Patentansprüche**

1.  Verfahren zum Betrieb eines einem Mobilfunknetz (MFN) zugeordneten Abrechnungssystems (AS) zur Abrechnung einer kostenpflichtigen Nutzung von Daten (www.info1.de), welche seitens eines netzexternen Datenspeichers (DS) bereitgestellt werden, wobei zur Nutzung die Daten (www. info1.de) mittels eines mobilen Endgeräts (KEG) eines Nutzers des Mobilfunknetzes (MFN) abgerufen werden, wobei bei dem Verfahren

    -   von dem mobilen Endgerät (KEG) eine den Nutzer kennzeichnende Nutzeradresse (MSISDN) und ein die abzurufenden Daten kennzeichnendes Datenkennzeichen (www. info1.de) zu einem mit dem Mobilfunknetz (MFN) verbundenen Zwischenknoten (ZK) übertragen wird,
    -   von dem Zwischenknoten (ZK) aus der Nutzeradresse (MSISDN) mittels eines Verschlüsselungsverfahrens eine anonyme Nutzerkennung (AUID) erzeugt wird,
    -   von dem Zwischenknoten die anonyme Nutzerkennung (AUID) und das Datenkennzeichen (www.info1.de) zu dem Datenspeicher (DS) übertragen wird, wodurch der Datenspeicher (DS) veranlasst wird, eine den abgerufenen Daten zugeordnete Kostengröße und die anonyme Nutzerkennung (AUID) zu dem Abrechnungssystem (AS) zu übertragen,
    -   von dem Abrechnungssystem (AS) mittels eines dem Verschlüsselungsverfahren zugehörigen Schlüssels (KEY) aus der anonymen Nutzerkennung (AUID) die Nutzeradresse (MSISDN) zurückgewonnen wird, und
    -   von dem Abrechnungssystem (AS) unter Nutzung der Nutzeradresse (MSISDN) und der Kostengröße ein Kostenkonto (R-KK,V-KK), welches dem Nutzer zugeordnet ist, belastet wird.

2.  Verfahren nach Anspruch 1,
    **dadurch gekennzeichnet, dass**

    -   der Zwischenknoten (ZK) über das Internet (I-NET) mit dem Datenspeicher (DS) verbindbar ist.

3.  Verfahren nach Anspruch 1 oder 2,
    **dadurch gekennzeichnet, dass**
    von dem Abrechnungssystem (AS) das Kostenkonto (V-KK) des Nutzers belastet wird, indem

    -   auf dem Kostenkonto (V-KK) entsprechend der Kostengröße ein Kostenbetrag reserviert (Res2) wird,

- bei erfolgreicher Reservierung eine Reservierungserfolgsnachricht (Res_OK) von dem Abrechnungssystem (AS) an den Datenspeicher (DS) übertragen wird, wodurch der Datenspeicher (DS) veranlasst wird, die abgerufenen Daten (www.info1de) über den Zwischenknoten (ZK) zu dem Endgerät (KEG) des Nutzers zu übertragen (dat) und bei erfolgreicher Übertragung eine die anonyme Nutzerkennung (AUID) und die Kostengröße enthaltende Belastungsnachricht (Char(AUID)) an das Abrechnungssystem (AS) zu senden, und

- daraufhin von dem Abrechnungssystem (AS) das Kostenkonto (V-KK) entsprechend der Kostengröße belastet wird.

4. Verfahren nach einem der Ansprüche 1 bis 3, **dadurch gekennzeichnet, dass**

- nach Belastung des Kostenkontos von dem Abrechnungssystem (AS) eine Belastungs-Erfolgsnachricht (Char_OK) an den Datenspeicher (DS) übertragen wird, wodurch dieser (DS) veranlasst wird, die Belastung des Kontos betreffende Daten für eine spätere Belastungsüberprüfung zu speichern (Log).

5. Verfahren nach Anspruch 4, **dadurch gekennzeichnet, dass** die Belastungs-Erfolgsnachricht (Char_OK) von dem Abrech-nungssystem (AS) mit einer Signatur (sig) des Abrechnungssystems (AS) versehen wird, wodurch die Herkunft der Belastungs-Erfolgsnachricht (Char_OK(sig)) belegbar ist.

6. Verfahren nach einem der Ansprüche 1 bis 5, **dadurch gekennzeichnet, dass** als Kostenkonto ein vorausbezahltes Kostenkonto (V-KK) des Nutzers belastet wird.

7. Verfahren nach einem der Ansprüche 1 bis 5, **dadurch gekennzeichnet, dass** als Kostenkonto ein Registrierungs-Kostenkonto (R-KK) des Nutzers belastet wird, wobei die Einträge des Registrierungs-Kostenkontos (R-KK) nach Nutzung der abgerufenen Daten zu einer Rechnungserstellung (R) für den Nutzer verwendet werden.

8. Verfahren nach einem der Ansprüche 3 bis 7, **dadurch gekennzeichnet, dass** auf dem Kostenkonto (V-KK) nur dann der Kostenbetrag reserviert wird, wenn eine zuvor vom Abrechnungssystem (AS) bei dem Zwischenknoten (ZK) durchgeführte Kontrollabfrage (KA) ergeben hat, dass von dem mobilen Endgerät (KEG) die Daten (www.info1.de) abgerufen (http1) wurden.

9. Verfahren nach einem der Ansprüche 1 bis 8, **dadurch gekennzeichnet, dass** von dem Abrechnungssystem (AS) das Kostenkonto (V-KK) nur dann belastet wird, wenn eine zuvor vom Abrechnungssystem (AS) bei dem Zwischenknoten (ZK) durchgeführte Kontrollabfrage (KA) ergeben hat, dass von dem mobilen Endgerät (KEG) die Daten (www.info1.de) abgerufen (http1) wurden.

10. Datenübertragungsnetz mit einem zur Datenübertragung dienenden Zwischenknoten (ZK) und einem Abrechnungssystem (AS), wobei bei dem Datenübertragungsnetz

- das Abrechnungssystem (AS) eine Empfangseinrichtung (E) zum Empfang von anonyme Nutzerkennungen (AUID) enthaltenden Nachrichten aufweist, und

- das Abrechnungssystem (AS) eine Belastungseinrichtung (B) zur Belastung von Kostenkonten (V-KK,R-KK), welche Nutzern des Mobilfunknetzes (MFN) zugeordnet sind, aufweist,

**dadurch gekennzeichnet, dass**

- der Zwischenknoten (ZK) eine Verschlüsselungseinrichtung (MSISDN→AUID) zur Erzeugung einer anonymen Nutzerkennung (AUID) aus einer den Nutzer eines mobilen Endgerätes (KEG) kennzeichnenden Nutzeradresse (MSISDN) aufweist, und

- das Abrechnungssystem (AS) eine Entschlüsselungseinrichtüng (AUID→MSISDN) zur Zurückgewinnung der Nutzeradresse (MSISDN) aus der anonymen Nutzerkennung (AUID) mittels eines dem Verschlüsselungsverfahren (MSISDN→AUID) zugehörigen Schlüssels (KEY) aufweist.

11. Datenübertragungsnetz nach Anspruch 10, **dadurch gekennzeichnet, dass**

- das Abrechnungssystem (AS) über eine Kontrollschnittstelle (KS) mit dem Zwischenknoten (ZK) verbindbar ist, welche einen Austausch von Kontrollabfragen (KA) und Abfrageantworten (KAA) zwischen dem Abrechnungssystem (AS) und dem Zwischenknoten (ZK) ermöglicht, wobei die Kontrollabfragen (KA) und die Abfrageantworten (KAA) einen erfolgten Abruf (http1) von Daten durch das mobile Endgerät (KEG) betreffen.

**Claims**

1. Method for operating a billing system (AS) associated with a mobile radio network (MFN) for billing for tariffable use of data (www.info1.de) provided by a network-external data store (DS), where the data (www.info1.de) are used by virtue of their being retrieved using a mobile terminal (KEG) belonging to a user of the mobile radio network (MFN), where the method involves

   - the mobile terminal (KEG) transmitting a user address (MSISDN), identifying the user, and a data identifier (www.info1.de), identifying the data which are to be retrieved, to an intermediate node (ZK) connected to the mobile radio network (MFN),
   - the intermediate node (ZK) generating an anonymous user identifier (AUID) from the user address (MSISDN) using an encryption method,
   - the intermediate node transmitting the anonymous user identifier (AUID) and the data identifier (www.info1.de) to the data store (DS), as a result of which the data store (DS) is prompted to transmit a cost variable, associated with the retrieved data, and the anonymous user identifier (AUID) to the billing system (AS),
   - the billing system (AS) using a key (KEY) associated with the encryption method to recover the user address (MSISDN) from the anonymous user identifier (AUID), and
   - the billing system (AS) using the user address (MSISDN) and the cost variable to debit a cost account (R-KK, V-KK) which is associated with the user.

2. Method according to Claim 1,
   **characterized in that**

   - the intermediate node (ZK) can be connected to the data store (DS) via the Internet (I-NET).

3. Method according to Claim 1 or 2,
   **characterized in that**
   the billing system (AS) debits the user's cost account (V-KK) by virtue of

   - a cost sum being reserved (Res2) in the cost account (V-KK) in line with the cost variable,
   - a reservation success message (Res_OK) being transmitted from the billing system (AS) to the data store (DS) upon successful reservation, as a result of which the data store (DS) is prompted to transmit (dat) the retrieved data (www.info1.de) to the user's terminal (KEG) via the intermediate node (ZK) and, upon successful transmission, to send a debit message (Char(AUID)), containing the anonymous user identifier (AUID) and the cost variable, to the billing system (AS), and
   - the billing system (AS) then debiting the cost account (V-KK) in line with the cost variable.

4. Method according to one of Claims 1 to 3,
   **characterized in that**

   - when the cost account has been debited by the billing system (AS), a debit success message (Char_OK) is transmitted to the data store (DS), as a result of which the data store (DS) is prompted to store (Log) data relating to the debiting of the account for a subsequent debit check.

5. Method according to Claim 4,
   **characterized in that**
   the billing system (AS) provides the debit success message (Char_OK) with a signature (sig) from the billing system (AS), as a result of which it is possible to prove the origin of the debit success message (Char_OK(sig)).

6. Method according to one of Claims 1 to 5,
   **characterized in that**
   the cost account debited is a prepaid cost account (V-KK) belonging to the user.

7. Method according to one of Claims 1 to 5,
   **characterized in that**
   the cost account debited is a registration cost account (R-KK) belonging to the user, with the entries in the registration cost account (R-KK) being used, following use of the retrieved data, to invoice (R) the user.

8. Method according to one of Claims 3 to 7,
   **characterized in that**
   the cost sum is reserved in the cost account (V-KK) only if a control request (KA) made by the billing system (AS) to the intermediate node (ZK) beforehand has shown that the mobile terminal (KEG) has retrieved (http1) the data (www.info1.de).

9. Method according to one of Claims 1 to 8,
   **characterized in that**
   the billing system (AS) debits the cost account (V-KK) only if a control request (KA) made by the billing system (AS) to the intermediate node (ZK) beforehand has shown that the mobile terminal (KEG) has retrieved (http1) the data (www.info1.de).

10. Data transmission network having an intermediate node (ZK) used for data transmission and a billing system (AS), where, in the data transmission network,

- the billing system (AS) has a reception device (E) for receiving messages containing anonymous user identifiers (AUID), and
- the billing system (AS) has a debiting device (B) for debiting cost accounts (V-KK, R-KK) which are associated with users of the mobile radio network (MFN),

**characterized in that**

- the intermediate node (ZK) has an encryption device (MSISDN→AUID) for generating an anonymous user identifier (AUID) from a user address (MSISDN) identifying the user of a mobile terminal (KEG), and
- the billing system (AS) has a decryption device (AUID→MSISDN) for recovering the user address (MSISDN) from the anonymous user identifier (AUID) using a key (KEY) associated with the encryption method (MSISDN→AUID).

11. Data transmission network according to Claim 10, **characterized in that**

- the billing system (AS) can be connected to the intermediate node (ZK) via a control interface (KS) which allows control requests (KA) and request responses (KAA) to be exchanged between the billing system (AS) and the intermediate node (ZK), with the control requests (KA) and the request responses (KAA) relating to retrieval (http1) of data which has been effected by the mobile terminal (KEG).

**Revendications**

1. Procédé pour faire fonctionner un système de facturation (AS) associé à un réseau de radiocommunication mobile (MFN) en vue de la facturation d'une utilisation payante de données (www.info1.de) qui sont mises à disposition par une mémoire de données (DS) externe au réseau, les données (www. info1.de) pour être utilisées étant demandées au moyen d'un terminal mobile (KEG) d'un utilisateur du réseau de radiocommunication mobile (MFN), à savoir procédé dans lequel

- le terminal mobile (KEG) transmet une adresse d'utilisateur (MSISDN) identifiant l'utilisateur et un identificateur de données (www.info1.de) identifiant les données à demander à un noeud intermédiaire (ZK) relié au réseau de radiocommunication mobile (MFN),
- le noeud intermédiaire (ZK) produit à partir de l'adresse d'utilisateur (MSISDN) et au moyen d'un procédé de cryptage un identificateur d'utilisateur anonyme (AUID),
- le noeud intermédiaire transmet l'identificateur d'utilisateur anonyme (AUID) et l'identificateur de données (www.info1.de) à la mémoire de données (DS), ce qui invite la mémoire de données (DS) à transmettre le coût associé aux données demandées et l'identificateur d'utilisateur anonyme (AUID) au système de facturation (AS),
- le système de facturation (AS) récupère à partir de l'identificateur d'utilisateur anonyme (AUID) et au moyen d'une clé (KEY) associée au procédé de cryptage l'adresse d'utilisateur (MSISDN), et
- le système de facturation (AS) débite un compte (R-KK, V-KK) qui est associé à l'utilisateur en utilisant l'adresse d'utilisateur (MSISDN) et le coût.

2. Procédé selon la revendication 1, **caractérisé par le fait que** le noeud intermédiaire (ZK) peut être relié à la mémoire de données (DS) par l'intermédiaire d'internet (I-NET).

3. Procédé selon la revendication 1 ou 2, **caractérisé par le fait que** le système de facturation (AS) débite le compte (V-KK) de l'utilisateur

- en réservant (Res2) sur le compte (V-KK) un montant correspondant au coût,
- une fois la réservation réussie, en transmettant un message de réussite de réservation (Res_OK) du système de facturation (AS) à la mémoire de données (DS), ce qui invite la mémoire de données (DS) à transmettre (dat) les données demandées (www.info1.de) par l'intermédiaire du noeud intermédiaire (ZK) au terminal (KEG) de l'utilisateur et, une fois la transmission réussie, à envoyer un message de débit (Char (AUID)) contenant l'identificateur d'utilisateur anonyme (AUID) et le coût au système de facturation (AS), et
- en débitant ensuite le compte (V-KK) conformément au coût au moyen du système de facturation (AS).

4. Procédé selon l'une des revendications 1 à 3, **caractérisé par le fait que**, après débit du compte par le système de facturation (AS), un message de réussite de débit (Char_OK) est transmis à la mémoire de données (DS), ce qui invite celle-ci (DS) à mémoriser (Log) des données concernant le débit du compte en vue d'une vérification de débit ultérieure.

5. Procédé selon la revendication 4, **caractérisé par le fait que** le système de facturation (AS) munit d'une signature (sig) du système de facturation (AS) le message de réussite de débit (Char_OK), ce qui fait que la provenance du message de réussite de débit (Char_OK (sig)) peut être justifiée.

6. Procédé selon l'une des revendications 1 à 5, **caractérisé par le fait que**, comme compte, on débite un compte approvisionné (V-KK) de l'utilisateur.

7. Procédé selon l'une des revendications 1 à 5, **caractérisé par le fait que**, comme compte, on débite un compte à enregistrement (R-KK) de l'utilisateur, les enregistrements du compte à enregistrements (R-KK) étant utilisés après l'utilisation des données demandées pour l'élaboration d'une facture (R) destinée à l'utilisateur.

8. Procédé selon l'une des revendications 3 à 7, **caractérisé par le fait que** le montant n'est réservé sur le compte (V-KK) que si une interrogation de contrôle (KA) effectuée auparavant par le système de facturation (AS) auprès du noeud intermédiaire (ZK) a montré que les données (www.info1.de) ont été demandées (http1) par le terminal mobile (KEG).

9. Procédé selon l'une des revendications 1 à 8, **caractérisé par le fait que** le compte (V-KK) n'est débité par le système de facturation (AS) que si une interrogation de contrôle (KA) effectuée auparavant par le système de facturation (AS) auprès du noeud intermédiaire (ZK) a montré que les données (www.info1.de) ont été demandées (http1) par le terminal mobile (KEG).

10. Réseau de transmission de données avec un noeud intermédiaire (ZK) servant à la transmission de données et avec un système de facturation (AS), à savoir réseau dans lequel

    - le système de facturation (AS) comporte un dispositif récepteur (E) pour recevoir des messages contenant des identificateurs d'utilisateurs anonymes (AUID), et
    - le système de facturation (AS) comporte un dispositif de débit (B) pour débiter des comptes (V-KK, R-KK) qui sont associés à des utilisateurs du réseau de radiocommunication mobile (MFN),

         **caractérisé par le fait que**

    - le noeud intermédiaire (ZK) comporte un dispositif de cryptage (MSISDN → AUID) pour produire un identificateur d'utilisateur anonyme (AUID) à partir d'une adresse d'utilisateur (MSISDN) identifiant l'utilisateur d'un terminal mobile (KEG), et
    - le système de facturation (AS) comporte un dispositif de décryptage (AUID → MSISDN) pour récupérer l'adresse d'utilisateur (MSISDN) à partir de l'identificateur d'utilisateur anonyme (AUID) et au moyen d'une clé (KEY) associée au procédé de cryptage (MSISDN → AUID).

11. Réseau de transmission de données selon la revendication 10, **caractérisé par le fait que** le système de facturation (AS) peut être relié au noeud intermédiaire (ZK) par l'intermédiaire d'une interface de contrôle (KS) qui permet un échange d'interrogations de contrôle (KA) et de réponses aux interrogations (KAA) entre le système de facturation (AS) et le noeud intermédiaire (ZK), les interrogations de contrôle (KA) et les réponses aux interrogations (KAA) concernant une demande effectuée (http1) de données par le terminal mobile (KEG).